# DEMANDE DE BREVET EUROPEEN

(11) **EP 2 315 375 A1**
(43) Date de publication de la demande: **27.04.2011**
(21) Numéro de dépôt: 09305653.9
(22) Date de dépôt: 07.07.2009
(51) Int. Cl.: H04B 17/00

(54) **Dispositif indicateur de champ radiofréquence et procédé de fabrication**

(71) Demandeur: Gemalto SA, 92190 Meudon (FR)
(72) Inventeur: Bajolle, Antoine, 13390 Auriol (FR); Allot, Francis, 13008 Marseille (FR); Gaspari, Sébastien, 13005 Marseille (FR)

(57) **Abrégé**

L'invention concerne un dispositif comprenant un composant électrique/électronique (8, 2, 12a, 13) relié à au moins une antenne radiofréquence (3, 19, 20) susceptible d'être parcouru par un courant généré dans le circuit d'antenne et un indicateur de courant généré ;

Le dispositif se distingue en ce que ledit indicateur comprend un composé luminescent (6, 16), agencé dans le dispositif de manière à être directement activé sous l'effet du courant (I) et/ou tension induit dans l'antenne.

L'invention vise également un procédé de réalisation et des applications au marquage d'authentification et/ou l'indication d'une transaction et/ou diagnostic de rupture d'antenne.

## Description

L'invention concerne un dispositif de communication radiofréquence comportant des moyens indicateurs de son fonctionnement sous l'effet d'un champ électromagnétique. Elle concerne aussi un système indicateur en tant que tel pour indiquer la présence d'une communication radiofréquence.

L'invention trouve principalement application dans le domaine des cartes à puce et dispositif intelligents radiofréquence.

De tels dispositifs ou systèmes indicateurs permettent de renseigner un porteur sur le déroulement d'une transaction mais aussi de l'avertir quand une activité est exercée à son insu sur son dispositif de communication tel qu'une carte de type radiofréquence à induction électromagnétique dans le but de pirater des informations ou des unités.

Un des problèmes soulevés par les dispositifs comportant des transpondeurs de type sans-contact visés par l'invention, et notamment pour des applications sensibles telles que carte bancaire, porte-monnaie électronique, e-passeport, cartes d'identité, provient du fait que le transpondeur, peut être interrogé par un lecteur distant, et cette opération peut être effectuée alors même que le porteur n'en est pas conscient.

Il existe des structures luminescentes notamment des structures de révolution utilisées notamment dans le domaine de la publicité ou obtenues sur des surfaces planes notamment par jet de matière. Ces structures sont alimentées en leur connectant une source de courant du secteur.

On connaît, par exemple, des cartes comportant des indicateurs des indicateurs lumineux tels une diode émettrice de lumière (led). Ces indicateurs (leds) sont branchés sur un circuit électrique du dispositif, par exemple en série sur une antenne ou dans un module de carte à puce sans-contact. Ces indicateurs requièrent d'ajouter un composant. Ils ne permettent pas de localiser une rupture précise de l'antenne en cas de rupture.

On connaît aussi une demande de brevet du demandeur dans lequel un indicateur sensible aux UV est associé au parcours d'une antenne pour la sécuriser et l'authentifier facilement. Toutefois, cette solution requiert un émetteur UV et ne permet pas de diagnostiquer le bon fonctionnement de l'antenne. Il ne permet pas d'avantage d'indiquer un fonctionnement à l'insu du porteur ou de localiser une rupture d'antenne.

Les dispositifs visés en premier lieu par l'invention sont de préférence des cartes à puce de type sans-contact ou hybride, des inserts comportant une antenne radiofréquence ou le cas échéant, tout support de circuit d'antenne comme des passeports électroniques. De tels dispositifs à communication radiofréquence dits transpondeurs sans-contact, répondent notamment pour la plupart à la norme ISO-IEC 14443. Des facteurs de forme autres que des cartes tels des clés USB peuvent être visés par l'invention.

L'invention a pour objectif de résoudre les inconvénients précités en permettant à l'utilisateur d'un dispositif de communication radiofréquence, tel une carte, de savoir quand son dispositif communique.
Un autre objectif est de permettre un diagnostic du fonctionnement du dispositif en cas de panne et/ou de localiser la panne sur l'antenne ou circuit.
Un autre objectif est de proposer un marquage d'authentification du dispositif.

L'invention consiste à agencer intimement les éléments fonctionnels de dispositifs radiofréquence tels antenne, module avec des composés sensibles changeant leurs aspects visuels, notamment composés électroluminescents en mettant en oeuvre de préférence des étapes courantes de fabrication du domaine de la carte à puce. De préférence, l'indicateur visuel est associé intimement à un composant électrique / électronique tel antenne, module, capacité d'un circuit du dispositif. En particulier, ce dispositif est un circuit radiofréquence. De préférence, l'indicateur visuel n'est pas un composant séparé simplement connecté au circuit mais fait partie de la structure même du circuit sans pouvoir être dissocié de lui sans détérioration.

A cet effet, l'invention a pour objet un dispositif comprenant un composant électrique/électronique relié à au moins une antenne radiofréquence susceptible d'être parcouru par un courant généré dans le circuit d'antenne et un indicateur de courant généré ;

Le dispositif se distingue en ce que l'indicateur comprend un composé luminescent, agencé dans le dispositif de manière à être directement activé sous l'effet du courant (I) et/ou tension induit dans l'antenne.

Selon d'autres modes de réalisation du dispositif,
- le composé est disposé sur le parcours de l'antenne ou sur un substrat supportant ledit composant,
- le composé s'étend à la surface d'une spire d'antenne,
- le composé est disposé dans une structure de couches en strate, ledit composé étant disposé entre une couche formant cathode et une couche formant anode reliées respectivement aux extrémités d'au moins une antenne ;
- le composant électrique / électronique comprend une structure de couches disposées en strates ;
- les strates (16b, 17b, 18b) sont de révolution ;
- la couche anode et cathode sont reliées aux extrémités d'une antenne secondaire ;
- le dispositif forme un objet portable à puce électronique réactif à un champ radiofréquence tel que une carte à puce, un passeport, un insert, un téléphone mobile, un étui communiquant, une étiquette.

L'invention a également pour objet un procédé de réalisation d'un dispositif comprenant un composant électrique/électronique relié à au moins une antenne radiofréquence susceptible d'être parcouru par un courant généré dans le circuit d'antenne et un indicateur de courant généré ;
Le procédé se distingue en ce qu'il comprend une étape d'agencement d'un composé luminescent par rapport au dispositif de manière à être directement activé sous l'effet du courant et/ou tension induit dans l'antenne.

Selon un mode de mise en oeuvre, du procédé, l'antenne même est réalisée en ayant une structure de couches en strates et une matière électroluminescente disposée entre une couche en strate formant cathode et une couche en strate formant anode.

Grâce à l'invention, l'antenne même participant à la transaction radiofréquence peut être authentifiée et/ou indiquer un endroit précis de rupture de l'antenne en cas de dysfonctionnement.
Il est notamment possible de réaliser en même temps l'antenne servant à la transaction et une antenne servant à l'activation du composé.
Grâce à l'invention, il est possible d'utiliser par simplicité et coût, des technologies courantes dans le domaine des cartes à puce notamment la gravure électrochimique, l'impression par jet de matière, la sérigraphie sans créer d'étapes de réalisation supplémentaires.
Grâce à l'invention, il est également possible d'apporter une personnalisation lumineuse à la carte pour chaque client.

L'invention a également pour objet une utilisation ou application du dispositif pour un marquage d'authentification, un avertisseur d'une transaction, un indicateur ou diagnostic de rupture d'antenne.

D'autres particularités et avantages de l'invention apparaîtront à la lecture de la description, faite à titre d'exemple non limitatif et en regard des dessins annexés sur lesquels :
- La figure 1 illustre schématiquement un dispositif de communication radiofréquence comportant un indicateur conforme à un mode de réalisation de l'invention;
- Les figures 2, 3, 4, 5A, 5B, 6 illustrent respectivement des modes différents de mise en oeuvre de l'indicateur dans le circuit;
- La figure 7a illustre un schéma de principe simplifié d'un dispositif d'alimentation d'une structure électroluminescente à cathode et anode servant notamment d'indicateur;
- La figure 7b illustre une application du schéma de principe indiqué ci-dessus à un transpondeur radiofréquence;
- Les figure 8 à 11 illustrent respectivement des connexions de générateur de courant alternatif selon différentes configurations de structure électroluminescentes;
- La figure 12 illustre une application de l'invention à une structure électroluminescente sous forme de module;
- La figure 13 illustre un exemple de réalisation de module électroluminescent utilisant le concept anode / cathode;
- La figure 14 illustre une première connexion de l'antenne primaire 20 à l'antenne secondaire 19 de la figure 7b en utilisant la structure en strate de la figure 8;
- La figure 15 illustre une seconde connexion de l'antenne primaire 20 à l'antenne secondaire 19 de la figure 7b en utilisant la structure en strate de la figure 8.

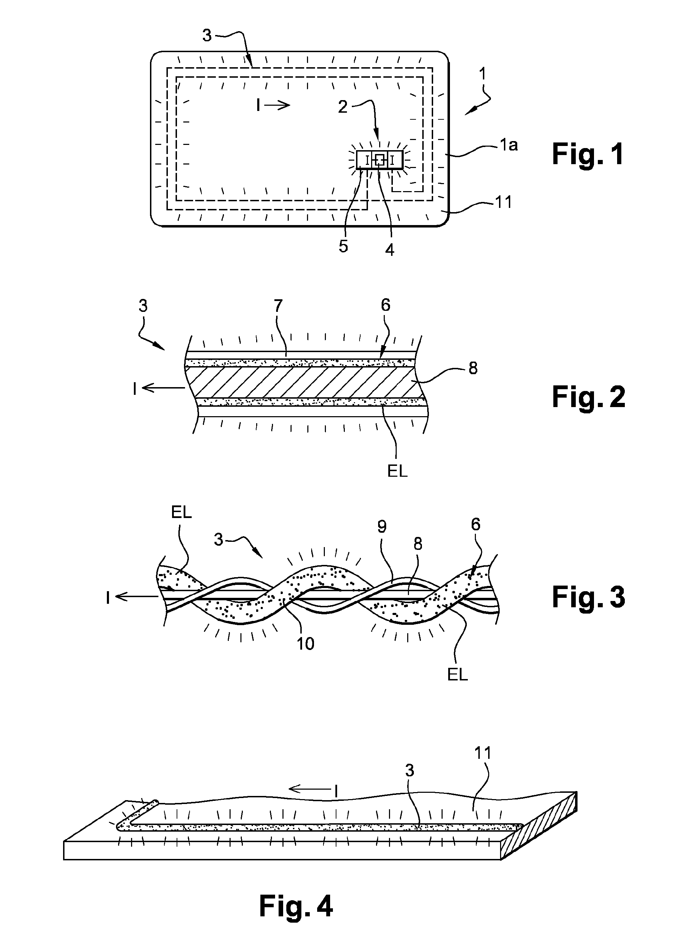

A la figure 1, un dispositif conforme à un mode de réalisation de l'invention, comprend un composant électrique/électronique 2 relié à au moins une antenne radiofréquence 3 susceptible d'être parcouru par un courant (I) généré dans l'antenne et un indicateur de fonctionnement ou de courant généré (illustré par un effet de brillance d'un composé électroluminescent).

Le dispositif peut constituer un objet portable réactif à un champ radiofréquence ou le générant, tel qu'une carte à puce, un passeport, un insert, un téléphone mobile, un étui communiquant, une étiquette électronique RFID, le cas échéant autonome en énergie. Le dispositif comprend de préférence au moins une partie de corps support transparent 11 ou translucide supportant l'antenne. Le matériau peut être noyé dans ladite partie du corps support. L'indicateur peut être disposé le long de l'antenne 3 et/ou sur le module 2 comportant un support 5. L'antenne est ici sous forme de bobine avec spires mais peut comprendre d'autres formes notamment UHF.

Le composant 2 est ici un module de type carte à puce sans contact comportant un microcircuit intégré 4 sur un support. Il peut être tout autre composant notamment une puce de circuit intégré nue 4. L'important est d'avoir du courant parcourant l'antenne ou un circuit et/ou le générant.
Le courant peut être induit par un lecteur radiofréquence ou autre émetteur. Le courant peut être émis par le dispositif lui-même disposant d'une source d'énergie (pile...).
Selon une caractéristique, l'indicateur comprend un composé 6 agencé de manière à être directement activé sous l'effet du courant et/ou tension induit dans l'antenne.

A la figure 2, le composé 6 se présente sous forme d'une couche 6 disposée sur le parcours de l'antenne 3. L'antenne peut comprendre un conducteur 8 revêtu d'une couche de ce composé EL et d'une couche transparente ou translucide isolante 7.
Le composé est de préférence électroluminescent notamment pour une meilleure visibilité mais il peut aussi bien être simplement apte à changer de couleur.

A la figure 3, le composé s'étend à la surface d'un conducteur d'antenne 8 ; Le composé est porté par au moins un des fils 9, 10 entourant le fil d'antenne 8 notamment par une technique de retordage de fils ou équivalent. Le composé peut être dispersé dans les fibres du fil 10; Par exemple, le composé peut être tenu sur les fibres et/ou filaments par une enduction ou émulsion dans lequel le fil a été trempé.

Dans un autre exemple (fig. 4), le composé de l'indicateur est sous forme d'encre chargée de particules dispersées dans les fibres du fil. L'antenne conductrice 3 est déposée par sérigraphie ou jet de matière sur un substrat 11.
Le composé électroluminescent EL peut être compris dans le conducteur de l'antenne. Le composé électroluminescent peut aussi être mélangé à un composé conducteur formant l'antenne comprenant notamment un polymère conducteur ou chargé de particules métalliques conductrices. Le matériau d'antenne et le composé peuvent être distribués sur un substrat par jet de matière.

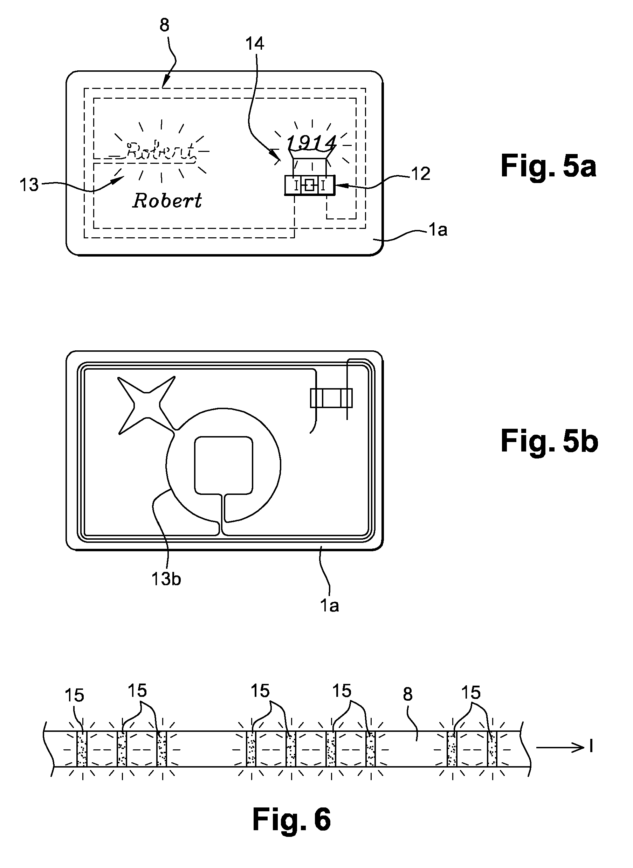

A la figure 5A, un dispositif radiofréquence comporte une antenne 8 réalisée sur un substrat 1a et reliée à un module 12. Deux motifs sont formés sur le substrat 1a et sont liés électriquement directement ou indirectement à l'antenne ; Ils comprennent un composé ayant la propriété de changer de couleur ou d'être électroluminescent au contact du courant passant dans un conducteur. Le composé forme un motif tel une signature, un code, une information alpha numérique.
Selon l'exemple, l'invention prévoit de former un motif 13, 14 au contact de ce conducteur. Ainsi un motif de personnalisation tel qu'un nom (ROBERT) ou un nombre (1914) est réalisé en continu et au contact du conducteur d'antenne 8 ou au contact des plages de connexion de l'antenne au module 12.

A la figure 5B, le « nom « ROBERT » est remplacé par un logo ou motif 13b.

A la figure 6, des motifs 15 sont disposés de manière à former des anneaux ou lignes sur le conducteur. Les lignes espacées entre elles peuvent être groupées par plusieurs (2, 3, ou 4) à la manière d'une représentation codée ou à la manière d'un code barre. On peut ainsi contrôler l'authenticité du fil conducteur grâce à ce code.

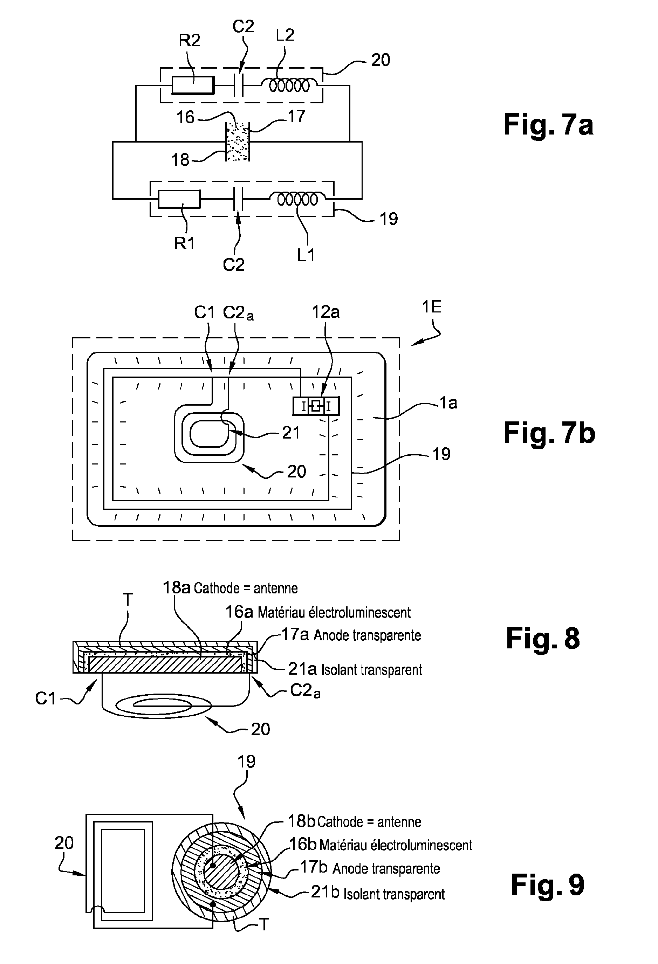

A la figure 7a, l'invention prévoit un montage particulier permettant une activation de composés électroluminescents. Le composé 16 est disposé entre une anode 17 et cathode 18 comme celles des plaques d'un condensateur
Le montage comprend une antenne primaire 19 dont les bornes sont reliées aux plaques du condensateur 17, 18. L'antenne primaire comprend un circuit d'antenne présentant une résistance R1 et une capacité C1 et inductance L1.
De même, le montage comporte une antenne secondaire 20 reliée également aux plaques du condensateur 17, 18 et présentant une résistance R2, une capacité C2 et inductance L2.
Grâce à ce montage soumis à un champ radiofréquence d'un lecteur notamment conforme à l'ISO 14443, l'antenne primaire ou secondaire véhicule un courant induit et provoque une différence de tension alternative aux bornes des plaques 17, 18. Cette tension alternative active de manière connue le composé électroluminescent disposé entre les plaques pour émettre un rayonnement.
Une des antennes primaire ou secondaire peut être reliée à un composant électronique radiofréquence 2 ou 12 (non représenté).

A la figure 7b, un dispositif radiofréquence comprend sur un support 1a une antenne primaire 19 reliée à un composant 12. Il comprend également un générateur de tension alternative 20. Ce générateur est ici une antenne secondaire 20 mais pourrait être un condensateur.

Selon deux modes de réalisation illustrés ci-dessous (aux figures 7 et 8), l'antenne comprend une matière électroluminescente et une structure de couches en strate ; la matière est disposée entre une couche formant cathode et une couche formant anode.

A la figure 8, on détaille schématiquement la structure de l'antenne primaire 19 vue en coupe transversale ; les plaques 17, 18 font partie intégrante de l'antenne. L'antenne est plate sur un substrat et les plaques 17, 18 prennent la forme de strates disposées sur un conducteur de base 18a formant les spires d'antenne.
L'antenne comprend un conducteur formant le motif d'antenne ainsi que la partie cathode du condensateur 18a. Par dessus le conducteur 18a est disposé une couche de matériau électroluminescent 16a, recouvert à son tour par une couche de conducteur 17a formant l'anode. L'anode et /ou la cathode sont de préférence transparente (s) pour permettre la visibilité du rayonnement électroluminescent à travers elles. Une couche isolante transparente T ou translucide peut être disposé ultérieurement ou formé avec l'antenne. L'isolant peut être réalisé par tout autre moyen notamment enduction ou lamination de feuilles sur l'antenne et le substrat.
La couche cathode et couche anode sont respectivement reliées à un générateur de tension alternatif en particulier aux extrémités d'une antenne radiofréquence secondaire 20.

La figure 9 illustre un schéma équivalent au précédent dans lequel l'antenne, représentée en section transversale, comporte des strates de révolution autour d'une âme conductrice 18b.

L'âme est un conducteur notamment cuivre formant une cathode et formant le conducteur de l'antenne primaire; il est recouvert d'une couche d'un matériau électroluminescent 16b de même nature que précédemment; Ce dernier est recouvert d'une couche de matériau conducteur transparent ou translucide 17b, puis d'un isolant T également transparent.
L'isolant peut être comme précédemment réalisé par des feuilles ou couches d'un substrat et feuille de recouvrement prenant la structure en sandwich.

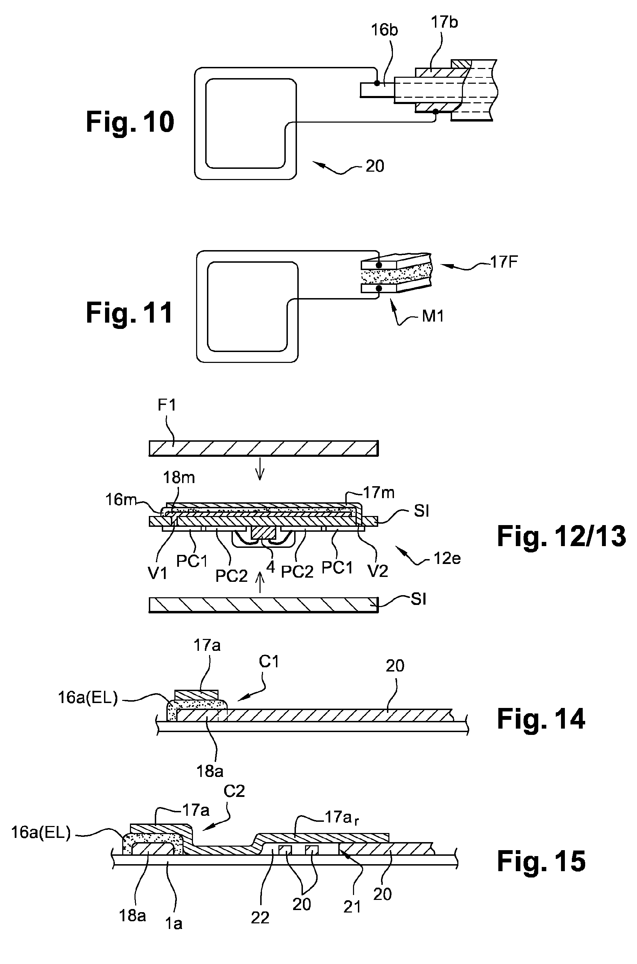

La figure 10 reprend le même montage que précédemment en montrant l'antenne en coupe longitudinale. L'extrémité de la structure peut être dénudée pour permettre une connexion à l'antenne directement ou via des plages de contact intermédiaires.

A la figure 11, l'antenne est reliée à deux plaques pouvant former un motif quelconque M1 et le matériau électroluminescent est agencé au milieu. Par exemple, ces plaques dessinent un contour d'une figure quelconque, un logo, un visage...
Plus exactement, selon un mode de réalisation à la figure 13, les plaques sont intégrées à un module électronique 12e; celui-ci comprend un substrat isolant SI comprenant sur une face des plages de connexion PC2 à un microcircuit 4 et des plages de connexion à des extrémités d'antenne. La puce peut ou non être connectée à la même antenne que celle activant le matériau électroluminescent. Dans un cas, le module comporte des contacts spécifiques PC1 pour la structure en strate électroluminescente. Dans l'autre cas, le module comporte au moins 4 contacts, deux PC1 pour connexion des strates à un générateur de tension alternative tel une antenne primaire ou secondaire et deux autres contacts PC2 pour la communication radiofréquence de la puce 4.

Sur l'autre face on retrouve en coupe la structure en strate équivalente à celle de la figure 8, à savoir une première couche formant l'anode 17 m puis une couche de matériau électroluminescent 16m puis une couche formant cathode 18m. La cathode et anode sont reliées respectivement aux plages de contact PC1 situées sur la face opposée du substrat par des vias conducteurs V1, V2 traversant le substrat SI.
Dans le cas où le module comprend 4 plages de contact, deux pour l'antenne primaire et deux pour l'antenne secondaire activant le matériau EL, ces plages peuvent être disposées indifféremment à coté les unes des autres sur la même face pour faciliter la connexion aux antennes ou sur des faces opposées.
Le module connecté à l'antenne peut être fixé à une feuille de substrat S1 et/ou de recouvrement F1.

On va décrire maintenant un exemple pratique de mise en oeuvre d'un mode de mise en oeuvre du procédé à travers la réalisation d'un dispositif radiofréquence correspondant à celui de la figure 7b.
L'antenne primaire a ici une structure en strate comme à la figure 8. L'antenne 20, disposée par exemple au centre du dispositif, est connectée à la structure en strate 19 par deux points de connexion C1 et C2. Ils sont respectivement connectés à une anode 17a et cathode 18a de la structure (ou inversement).
L'antenne primaire 19 comprend une couche conductrice 18a obtenue par gravure de cuivre ou dépôt sérigraphique ou jet de matière conductrice.
Ses extrémités seront connectées au composant radiofréquence 12 de manière classique en fonction de la technique utilisée pour l'antenne. Par exemple, puce retournée connectée directement à l'antenne sérigraphie ou obtenue par jet de matière ou puce ou module connectés par fil soudé (wire bonding) à des plages de connexions de l'antenne gravées avec les spires d'antenne dans le cas d'une gravure.
Les extrémités de l'antenne pourront être maintenues nues sans être recouvert de strates pour faciliter leur connexion.
De manière avantageuse, l'antenne 20 est réalisée au moins en partie en même temps que les spires 18a (gravure ou sérigraphie ou jet de matière). Sur la figure 14, on voit que la partie 18a de l'antenne primaire 19 relie de manière continue l'antenne secondaire 20 au point de jonction C1. Ce point C1 de connexion du générateur à la structure en strate peut être pris à d'autres endroits voire même sur le module.

La matière de la spire de l'antenne 20 s'étend de manière continue pour réaliser plusieurs spires sur un même plan jusqu'à un point 21 situé juste avant de croiser ces spires au point 21 de début de pont, en direction du point de connexion C2a à l'anode de l'antenne primaire.

Dans une seconde étape, on réalise un dépôt notamment par jet de matière, d'une matière EL électroluminescente 16a parmi celles connues telle que du Poly (N-vinylcarbazole) ou PVK / (PEDOT pour PEDOP pour électro-chrome)
Cette matière 16a recouvre de préférence toute la largeur des spires de l'antenne primaire 19 et s'étend de préférence même jusqu'au substrat 1a en recouvrant les bords latéraux des spires ou cathode. Ceci permet d'éviter un court-circuit éventuel entre l'anode et la cathode.

Ensuite, le procédé comporte la réalisation de ponts isolants au dessus des spires de l'antenne primaire et au dessus des spires de l'antenne secondaire (opération connue en soi). Le pont est réalisé par dépôt d'une couche isolante 22 par jet de matière par exemple.
Ensuite, selon une autre étape, le procédé comprend la réalisation de la partie anode 17a de la structure d'antenne primaire.
Le matériau choisi peut être parmi ceux connus et notamment le « Indium-Titane-oxide » (I.T.O). Le dépôt peut s'effectuer avec les mêmes technologies comme précédemment. Cette partie anode 17a s'étend au moins partiellement en regard de la partie cathode 18a ; Elles comportent ici une largeur sensiblement semblable dans ce mode de mise en oeuvre.
De préférence le matériau est transparent pour une meilleure visibilité des rayonnements. Toutefois, l'émission peut s'effectuer latéralement, le matériau 17a n'étant pas transparent.

On profite de cette étape pour réaliser, par continuité, la seconde connexion C2 de la partie anode 17a à l'antenne secondaire 20 par le biais d'une extension 17ar de la partie cathode 17a en passant sur le pont isolant 22 (pour raccorder l'antenne secondaire 20) jusqu'à l'extrémité 21 de début de pont.

Le dispositif ainsi réalisé peut comporter un revêtement isolant soit par pulvérisation ou dépôt d'une couche isolante T (non représentée), soit par lamination d'une feuille isolante par dessus. De préférence, la couche isolante est transparente ou translucide au moins en partie au dessus de certaines ou toutes les surfaces électroluminescentes.

A la figure 14, une antenne primaire d'alimentation du module est réalisée classiquement notamment par fil incrusté sur un support et se trouve connectée au module notamment par thermo compression. Le dispositif comporte un motif quelconque réalisé en strates dont la cathode et anode sont reliés respectivement à une des plages de contact du module. Ici, la structure retenue est une structure filaire avec des strates de révolution comme précédemment.
Le fil âme cathode (préalablement dénudé ou non recouvert à cet endroit) peut être soudé par thermo compression à une plage du module tandis que l'anode est connectée à l'autre plage de contact du module notamment par colle conductrice.
L'antenne primaire fournit ainsi également l'énergie à la structure électroluminescente.

L'invention permet plusieurs utilisations du dispositif 1E; En particulier, pour un marquage d'authentification. Grâce à un marquage spécifique, on peut facilement savoir si un élément du dispositif est authentique par le fait qu'il émet un rayonnement lorsqu'un courant passe dans le circuit, notamment sous l'effet d'un champ radiofréquence d'un lecteur.

La structure de l'invention 1 E sert aussi d'avertisseur d'une transaction ; Ainsi par exemple à une borne sans contact, notamment d'accès, de transport ou bancaire, l'utilisateur est prévenu visuellement d'une transaction en cours. On peut aussi prévenir une transaction à l'insu du porteur.

Il est possible également d'utiliser le dispositif comme indicateur de rupture d'antenne. On peut repérer facilement une rupture d'antenne si l'antenne comporte la structure en strate comme décrite précédemment et diagnostiquer une panne de communication due à l'antenne et excluant le module. En effet, l'antenne n'émettra plus de rayonnement dans la partie disposée après une rupture de l'âme (figure 7b)

Dans d'autres modes de réalisation, notamment fig. 1-6, il n'y aura plus aucune émission électroluminescente.

Au sens de l'invention un composant électrique / électronique peut comprendre aussi bien un élément de circuit électrique tel qu'une résistance, une capacité ou une antenne, qu'un circuit intégré ou un module de carte à puce à contacts ou sans contact, des motifs conducteur électrique de forme quelconque tels des plaques. Le composant est par contre distinct d'une diode LED spécifique qui ne serait pas intimement liée à une structure de circuit mais simplement connectée.
Pour baisser la tension de fonctionnement, on peut procéder à l'ajout d'une ou plusieurs couches ci-dessous.
Suivant l'état de l'art pour la fabrication des diodes électroluminescentes, on pourra ajouter des couches supplémentaires entre le fil d'antenne et l'anode transparente. Des couches susceptibles d'être ajoutées comprennent :
- Dépôt métallique sur le fil d'antenne, afin de changer la nature chimique de la cathode.
- Couches d'injections des charges (électrons ou trous)
- Couches de transport des charges (électrons ou trous)
- Couches de blocage

Ces couches pouvant être des composés organiques ou non ou un mélange des deux.

## Revendications

1. Dispositif comprenant un composant électrique/électronique (8, 2, 13) relié à au moins une antenne radiofréquence (3, 20) susceptible d'être parcouru par un courant généré dans le circuit d'antenne et un indicateur de courant généré,
**caractérisé en ce que** ledit indicateur comprend un composé luminescent (6, 16), agencé dans le dispositif de manière à être directement activé sous l'effet du courant (I) et/ou tension induit dans l'antenne.

2. Dispositif selon la revendication précédente, **caractérisé en ce que** le composé (6, 14) est disposé sur le parcours de l'antenne ou sur un substrat (2) supportant ledit composant.

3. Dispositif selon la revendication 1, **caractérisé en ce que** le composé (16) s'étend à la surface d'une spire d'antenne.

4. Dispositif selon la revendication 1, **caractérisé en ce que** le composé (16a, 16b, 16m) est disposé dans une structure de couches en strate, ledit composé étant disposé entre une couche formant cathode (18a, 18b, 18m) et une couche formant anode (17a, 17b, 17m) reliées respectivement aux extrémités d'au moins une antenne (20, 19).

5. Dispositif selon la revendication 1, **caractérisé en ce que** le composant électrique / électronique (12 e) comprend une structure de couches disposées en strates.

6. Dispositif selon la revendication précédente, **caractérisé en ce que** les strates (16b, 17b, 18b) sont de révolution.

7. Dispositif selon l'une quelconque des revendications 4 à 6, **caractérisé en ce que** la couche anode et cathode sont reliées aux extrémités d'une antenne secondaire.

8. Dispositif selon l'une quelconque des revendications précédentes, **caractérisé en ce que** le composé forme un motif (10, 13, 13b, 14, 15) tel une signature, un code, une information alpha numérique.

9. Dispositif selon l'une quelconque des revendications précédentes formant un objet portable à puce électronique réactif à un champ radiofréquence tel que une carte à puce, un passeport, un insert, un téléphone mobile, un étui communiquant, une étiquette.

10. Procédé de réalisation d'un dispositif comprenant un composant (8, 2, 13) électrique/électronique relié à au moins une antenne radiofréquence (3, 20) susceptible d'être parcouru par un courant généré dans le circuit d'antenne et un indicateur de courant généré,
**caractérisé en ce qu'**il comprend une étape d'agencement d'un composé luminescent (6, 16) par rapport au dispositif de manière à être directement activé sous l'effet du courant et/ou tension induit dans l'antenne.

11. Procédé selon la revendication précédente, **caractérisé en ce que** l'antenne comprend une structure de couches en strate et une matière électroluminescente, ladite matière étant disposée entre une couche en strate formant cathode et une couche en strate formant anode.

12. Utilisation du dispositif selon l'une des revendications 1 à 9 pour :
- un marquage d'authentification,
- un avertisseur d'une transaction,
- un indicateur ou diagnostic de rupture d'antenne.
